# EUROPEAN PATENT SPECIFICATION

(11) **EP 1 516 907 B1**
(45) Date of publication and mention of the grant of the patent: **25.01.2012**
(21) Application number: 03760865.0
(22) Date of filing: 11.06.2003
(51) Int. Cl.: C09K 21/12, C08L 23/00, C08K 5/521, C08K 3/36, C08K 3/22, C08K 5/3492, C08K 5/00, C08K 5/52, C08K 3/32, C08L 23/02

(54) **FLAME RETARDER COMPOSITION AND FLAME RETARDANT RESIN COMPOSITION CONTAINING THE COMPOSITION**
FLAMMSCHUTZMITTEL UND SIE ENTHALTENDE FLAMMFESTE HARZZUSAMMENSETZUNG
COMPOSITION IGNIFUGEANTE ET COMPOSITION DE RESINE IGNIFUGEANTE CONTENANT LADITE COMPOSITION

(30) Priority: 24.06.2002 JP 2002182418
(43) Date of publication of application: 23.03.2005
(73) Proprietor: Adeka Corporation, Tokyo 116-8554 (JP)
(72) Inventor: KURUMATANI, Haruki Asahi Denka Co., Ltd., Saitama-shi, Saitama 336-0022 (JP); YAMAKI, Akihiro Asahi Denka Co., Ltd., Saitama-shi, Saitama 336-0022 (JP); KIMURA, Ryoji Asahi Denka Co., Ltd., Saitama-shi, Saitama 336-0022 (JP)
(74) Representative: Forstmeyer, Dietmar
(86) International application number: PCT/JP2003/007423
(87) International publication number: WO 2004/000973

(56) References cited:
- EP-A1- 1 277 794
- EP-A2- 0 126 454
- JP-A- 9 221 567
- JP-A- 2001 348 489
- JP-A- 2001 348 490
- JP-A- 2001 348 491

## Description

### Technical Field:

This invention relates to a flame retardant composition which hardly forms secondary agglomerates during mixing and grinding flame retarding components and to a flame-retardant resin composition containing the same. More particularly, it relates to a one-pack flame retardant composition which comprises two types of phosphate compounds, silicon dioxide or metal oxides, and at least one member selected from higher fatty acids, metal salts of higher fatty acid, higher fatty acid amide compounds, and esters between mono- or polyhydric alcohols and higher aliphatic carboxylic acids and hardly forms secondary agglomerates. The invention also relates to a synthetic resin composition which is obtained by incorporating the flame retardant composition into a synthetic resin and exhibits excellent flame retardancy without the aid of a halogen-based flame retardant that generates harmful gas on combustion.

### Background Art:

Synthetic resins have hitherto been applied widely to constructional materials, automotive parts, packaging materials, agricultural materials, housings of appliances, toys, and so forth because of their excellent chemical and mechanical characteristics. However, most of synthetic resins are combustible and indispensably need to be rendered flame-retardant for some applications. It is well known that flame retardation is achieved by using halogen flame retardants, inorganic phosphorus flame retardants including red phosphorus and polyphosphoric acid compounds such as ammonium polyphosphates, organic phosphorus flame retardants typified by triarylphosphoric ester compounds, metal hydroxides, antimony oxide, which is a flame retardant auxiliary, and melamine compounds, either alone or as a combination thereof.

For example, JP-A-8-176343 discloses a flame-retardant synthetic resin composition comprising a resin, an ammonium polyphosphate, a polyhydroxy compound, a triazine ring-containing compound, and a metal hydroxide. U.S. Patents 3,936,416 and 4,010,137 disclose a flame-retardant synthetic resin composition comprising a resin, a melamine polyphosphate, and penta- to tripentaerythritol. JP-A-11-152402 discloses a flame-retardant synthetic resin composition comprising polybutylene terephthalate (PBT), melamine pyrophosphate, and an aromatic phosphate oligomer. U.S. Patents 4,278,591 and 5,618,865 teach that melamine pyrophosphate and other phosphorus compounds are effective for flame retardation of polymers such as PBT. JP-A-10-183124 describes a flame retardant obtained from melamine, phosphoric anhydride, and piperazine hydrate. The flame retardation effects of these flame retardants are still insufficient, however. A flame retardant that imparts excellent flame retardancy at a reduced amount has thus been awaited.

U.S. Patent 45899375 discloses a flame-retardant resin composition comprising a resin, melamine pyrophosphate, piperazine pyrophosphate, and silicon dioxide. Although addition of silicon dioxide produces some effect on agglomeration to a certain extent, the composition is not sufficiently stable against long-term storage. A flame retardant composition with excellent storage stability has been demanded.

### Disclosure of the Invention:

An object of the present invention is to provide a flame retardant composition that can impart excellent flame retardancy to a synthetic resin at a small flame retardant content without using a halogen-based flame retardant involving harmful gas emission on combustion, and to provide a flame-retardant resin composition containing the flame retardant composition.

In consideration of the above-described circumstances, the present inventors have conducted extensive investigation and found as a result that compounding phosphate compounds (a) and (b) having specific structures, silicon dioxide or metal oxides, and at least one member selected from higher aliphatic carboxylic acids, metal salts of higher aliphatic carboxylic acid, higher fatty acid amide compounds, and esters between mono- or polyhydric alcohols and higher aliphatic carboxylic acids gives a flame retardant composition that is free from secondary agglomeration and capable of imparting excellent flame retardancy to a synthetic resin. The present invention has been reached based on this finding.

The present invention accomplishes the above object by providing a flame retardant composition essentially comprising the following components (A),(B),(C) and (D).
(A) A phosphate compound (a) represented by general formula (1) shown below.
(B) A phosphate compound (b) represented by general formula (3) shown below.
(C) Silicon dioxide or metal oxides
(D) At least one member selected from higher aliphatic carboxylic acids, metal salts of higher aliphatic carboxylic acid, higher fatty acid amide compounds, and esters between mono- or polyhydric alcohols and higher aliphatic carboxylic acids. 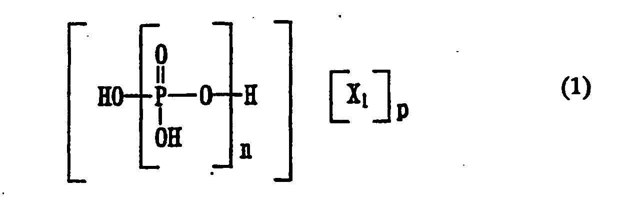
wherein n represents a number of 1 to 100; X₁ represents ammonia or a triazine derivative represented by formula (2) ; and 0<p≤n+2: 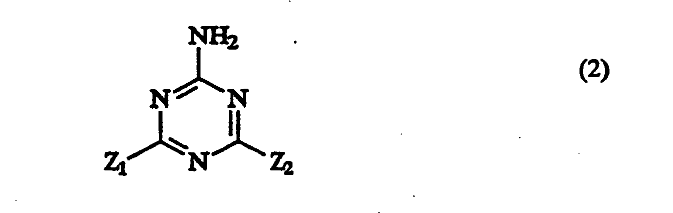 wherein Z₁ and Z₂, which may be the same or different, each represents a group selected from the group consisting of -NR₅R₆ (wherein R₅ and R₆, which may be the same or different, each represents a hydrogen atom, a straight-chain or branched alkyl group having 1 to 6 carbon atoms or a methylol group), a hydroxy group, a mercapto group, a straight-chain or branched alkyl group having 1 to 10 carbon atoms, a straight-chain or branched alkoxy group having 1 to 10 carbon atoms, a phenyl group, and a vinyl group. 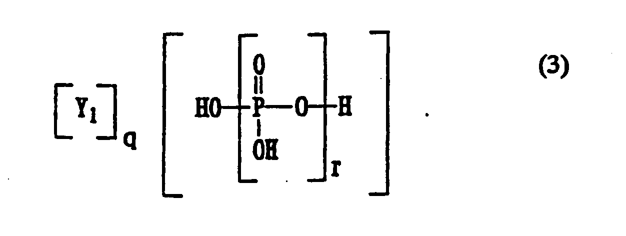 wherein r represents a number of 1 to 100; Y₁ represents [R₁R₂N(CH₂)ₘNR₃R₄], piperazine or a diamine containing a piperazine ring; R₁, R₂, R₃, and R₄, which may be the same or different, each represents a hydrogen atom or a straight-chain or branched alkyl group having 1 to 5 carbon atoms; m represents an integer of 1 to 10; and 0<q≤r+2.

### Best Mode for Carrying out the Invention:

The flame retardant composition and the flame-retardant resin composition containing the same according to the present invention will be described in detail.

The phosphate compound (a) represented by general formula (1) that can be used in the invention as component (A) includes phosphoric acid salts with ammonia or triazine derivatives.

The triazine derivatives are represented by general formula (2). The straight-chain or branched alkyl and alkoxy groups having 1 to 10 carbon atoms as represented by Z₁ and Z₂ in general formula (2) include alkyl groups, such as methyl, ethyl, propyl, isopropyl, butyl, sec-butyl, tert-butyl, isobutyl, amyl, isoamyl, tert-amyl, hexyl, cyclohexyl, heptyl, isoheptyl, tert-heptyl, n-octyl, isooctyl, tert-octyl, 2-ethylhexyl, nonyl, ad decyl; and alkoxy groups derived from these alkyl groups.

Examples of the triazine derivative are melamine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxyl-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, and 2-amino-4,6-dimercapto-1,3,5-triazine.

The phosphate compound (a) represented by general formula (1) which can preferably be used in the invention as component(A) includes a salt between a phosphoric acid and melamine and an ammonium polyphosphate compound. A salt between a phosphoric acid and melamine is obtained by the following method. Melamine pyrophosphate, for instance, is obtained by allowing sodium pyrophosphate and melamine to react at an arbitrary ratio in the presence of hydrochloric acid, followed by neutralizing with sodium hydroxide. Examples of melamine phosphate compounds which are preferably used in the invention are melamine orthophosphate, melamine pyrophosphate, and other melamine polyphosphates.

The ammonium polyphosphate compound is an ammonium polyphosphate or a compound composed mainly of an ammonium polyphosphate. The ammonium polyphosphate may be a commercially available one, such as Exolit 422 and 700 from Hoechst AG, Phos-Chek P/30 and P/40 from Monsanto, Sumisafe P from Sumitomo Chemical Co., Ltd., and Terraju S10 and S20 from Chisso Corp.

The compound composed mainly of an ammonium polyphosphate includes a thermosetting resin-coated or encapsulated ammonium polyphosphate, an ammonium polyphosphate coated with a melamine monomer or other nitrogen-containing organic compound, an ammonium polyphosphate treated with a surface active agent or silicone, and an ammonium polyphosphate having been made sparingly soluble by adding melamine, etc. in the preparation of an ammonium polyphosphate.

Commercially available compounds composed mainly of an ammonium polyphosphate include Exolit 462 from Hoechst, Sumisafe PM from Sumitomo Chemical, and Terraju C60, C70 and C80 from Chisso.

The phosphate compound (b) represented by general formula (3) that can be used in the invention as component (B) is a salt of a phosphoric acid with a diamine or piperazine.

The diamine represented by Y₁ in general formula (3) includes N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, tetramethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, piperazine, trans-2,5-dimethylpiperazine, 1,4-bis(2-aminoethyl)piperazine, and 1,4-bis(3-aminopropyl)piperazine. All of these diamine compounds are commercially available, and such commercially products may be utilized.

The phosphate compound (b) represented by general formula (3) that can be preferably used in the present invention as component(B) includes salts between phosphoric acids and piperazine. Piperazine phosphates are obtainable by the following process. Piperazine pyrophosphate, for instance, is easily obtained by allowing piperazine and pyrophosphoric acid to react in water or an aqueous methanol solution and collecting the salt as a sparingly water-soluble precipitate. The piperazine phosphate compounds preferred for use in the invention include piperazine orthophosphate, piperazine pyrophosphate, and other piperazine polyphosphates. Polyphosphoric acids used to prepare piperazine polyphosphates are not particularly limited in phosphoric acid composition. That is, the polyphosphoric acid may be a mixture of orthophosphoric acid, pyrophosphoric acid, triphosphoric acid, and other polyphosphoric acids.

The phosphate compound (a) as component (A) and the phosphate compound (b) as component (B) are preferably compounded at an (a)/(b) ratio (by mass) of 20/80 to 60/40, still preferably 30/70 to 50/50.

The phosphate compound (a) represented by general formula (1) and the phosphate compound (b) represented by general formula (3) that can be used in the invention preferably have an average particle size of 100 µm or smaller, still preferably 10 µm or smaller. The phosphate compounds with an average particle size greater than 100 µm not only tend to have poor dispersibility in resins, failing to manifest high flame retardancy but can reduce the mechanical strength of molded articles prepared from the resulting resin compositions.

Reduction of particle size to the above-recited level so as to improve flame retardancy can cause components (A) and (B) to agglomerate secondarily. For the purpose of preventing such secondary agglomeration, silicon dioxide or metal oxides is incorporated as component (C).

The metal oxides used in the invention as component (C) include titanium oxide, zinc oxide, calcium oxide, magnesium oxide, zirconium oxide, barium oxide, tin dioxide, lead dioxide, antimony oxide, molybdenum oxide, and cadmium oxide. Silicon dioxide is particularly preferred as component (C). Silicon dioxide to be added may have been subjected to various surface treatments. Silicon dioxide (silica) includes dry silica and wet silica. Commercially available silica products include Aerosil from Nippon Aerosil Co., Ltd.; Reosil and Tokusil from Tokuyama Corp.; Carplex from Shionogi & Co., Ltd.; Sylicia from Fuji Silysia Chemical, Ltd.; and Mizukasil from Mizusawa Industrial Chemicals, Ltd. Preferred of these species are hydrophobic ones having a methyl group chemically bonded to the surface, such as Aerosil R972, Aerosil R974, Aerosil R972V, and Aerosil R972CF from Nippon Aerosil.

The amount of the silicon dioxide or metal oxide as component (C) to be added is preferably 0.01 to 10 parts, still preferably 0.1 to 5 parts, by mass per 100 parts by mass of the total of components (A) and (B). The addition of less than 0.01 part by mass results in no substantial effects. The addition of more than 10 parts by mass undesirably lower the physical properties of the resin.

Component (D) is used in order to maintain the preventive effect of the agglomeration of component (C). The higher aliphatic carboxylic acids as component (D) include lauric acid, myristic acid, palmitic acid, stearic acid, arachic acid, behenic acid, and alkenylsuccinic anhydrides. The higher aliphatic carboxylic acid salts include zinc laurate, barium laurate, calcium stearate, zinc stearate, magnesium stearate, lithium stearate, aluminum stearate, and barium stearate. The fatty acid amide compounds include lauramide, myristamide, palmitamide, stearamide, behenamide, erucamide, montanamide, stearylerucamide, oleylpalmitamide, methylenebis(stearamide), ethylenebis(myristamide), and ethylenebis(stearamide). The esters between mono- or polyhydric alcohols and higher aliphatic carboxylic acids include glycerol fatty acid esters, sorbitan fatty acid esters, polyglycerol fatty acid esters, propylene glycol fatty acid esters, and higher alcohol fatty acid esters. The glycerol fatty acid esters include monoglycerides, diglycerides, and monoglyceride/diglyceride mixtures. Examples are glycerol monolaurate, glycerol monopalmitate, glycerol monostearate, glycerol monooleate, glycerol monobehenate, glycerol monoricinoleate, glycerol mono/dipalmitate, and glycerol mono/distearate. Examples of the sorbitan fatty acid esters are sorbitan laurate, sorbitan palmitate, sorbitan stearate, sorbitan oleate, and sorbitan laurate. Examples of the polyglycerol fatty acid esters are polyglycerol stearate and polyglycerol oleate. Examples of the propylene glycol fatty acid esters are propylene glycol monolaurate, propylene glycol monopalmitate, propylene glycol monostearate, propylene glycol monooleate, and propylene glycol monobehenate. The higher alcohol fatty acid esters include stearyl stearate.

Of the above-mentioned compounds as component (D), stearic acid, which is a higher aliphatic carboxylic acid, and ethylenebis(stearamide), which is a fatty acid amide compound, are particularly preferred.

The amount of component (D) to be used is preferably 0.01 to 10 parts by mass per 100 parts by mass of the total of components (A) and (B). The addition of less than 0.01 parts by mass results in no substantial effects. The addition of more than 10 parts by mass undesirably lower the physical properties of the resin.

The flame retardant composition of the present invention can be prepared by any method, for example, by grinding the components (A) to (D) individually and mixing the ground components, or by mixing the components all together, followed by grinding. It is preferred for the flame retardant composition to have an average particle size of 50 µm or smaller, desirably 30 µm or smaller, eventually at the time of use.

The flame retardant composition of the present invention is incorporated into a synthetic resin to impart excellent flame retardancy to the resin.

The synthetic resin that can be used in the present invention includes thermoplastic resins and thermosetting resins. The thermoplastic resins include olefin resins, such as α-olefin homopolymers, e.g., polypropylene, high-density polyethylene, low-density polyethylene, linear low-density polyethylene, polybutene-1, and poly-3-methylpentene, and olefin copolymers, e.g., ethylene-vinyl acetate copolymers and ethylene-propylene copolymers; halogen-containing resins, such as polyvinyl chloride, polyvinylidene chloride, chlorinated polyethylene, chlorinated polypropylene, polyvinylidene fluoride, chlorinated rubber, vinyl chloride-vinyl acetate copolymers, vinyl chloride-ethylene copolymers, vinyl chloride-vinylidene chloride copolymers, vinyl chloride-vinylidene chloride-vinyl acetate terpolymers, vinyl chloride-acrylic ester copolymers, vinyl chloride-maleic ester copolymers, and vinyl chloride-cyclohexylmaleimide copolymers; petroleum resins; coumarone resins, polystyrene, polyvinyl acetate, acrylic resins; copolymers of styrene (and/or α-methylstyrene) and other monomers (e.g., maleic anhydride, phenylmaleimide, methyl methacrylate, butadiene, and acrylonitrile), such as AS resins, ABS resins, MBS resins, and heat-resistant ABS resins; polymethyl methacrylate, polyvinyl alcohol, polyvinyl formal, polyvinyl butyral; linear polyesters, such as polyethylene terephthalate and polybutylene terephthalate; polyphenylene oxide; polyamide resins, such as polycaprolactam and polyhexamethylene adipamide; polycarbonate, polycarbonate/ABS resins, branched polycarbonate, polyacetal, polyphenylene sulfide, polyurethane, and cellulosic resins; and polyblends thereof. The thermosetting resins include phenol resins, urea resins, melamine resins, epoxy resins, and unsaturated polyester resins. Elastomers, such as isoprene rubber, butadiene rubber, acrylonitrile-butadiene copolymer rubber, and styrene-butadiene copolymer rubber, are also applicable. Of these resins, polyolefin resins which are difficult to make flame-retardant, particularly polypropylene resins and polyethylene resins, are suitable as a resin to which the flame retardant composition of the present invention is added to provide flame-retardant resin compositions.

The flame retardation technique according to the present invention is effective on any of the synthetic resins recited above, with the effects manifested somewhat varying depending on the density, softening point, solvent-insoluble content, and stereospecificity of the resin, whether or how much catalyst residue remains in the resin, the kind and the polymerization ratio of starting olefins, the kind of a polymerization catalyst used (e.g., a Lewis acid catalyst or a metallocene catalyst), and so forth.

The flame-retardant resin composition of the invention preferably contains 5 to 50 parts by mass, still preferably 10 to 40 parts by mass, of the flame retardant composition of the invention per 100 parts by mass of the synthetic resin.

If desired, the flame-retardant resin composition may contain polytetrafluoroethylene or titanium oxide as an anti-dripping agent for preventing dripping on combustion. Polytetrafluoroethylene or titanium oxide is used preferably in an amount of 0.01 to 5 parts by mass per 100 parts by mass of the synthetic resin. The addition of less than 0.01 parts by mass produces no substantial effects as an agglomeration inhibitor. The addition of more than 5 parts by mass undesirably lower the physical properties of the resin.

If desired, the flame-retardant resin composition of the invention can be stabilized with phenol antioxidants, phosphorus antioxidants, thioether antioxidants, ultraviolet absorbers, and hindered amine light stabilizers.

The above-mentioned phenol antioxidants include 2,6-di-tert-butyl-p-cresol, 2,6-diphenyl-4-octadecyloxyphenol, distearyl(3,5-di-tert-butyl-4-hydroxybenzyl) phosphonate, 1,6-hexamethylenebis[(3,5-di-tert-butyl-4-hydroxyphenyl)propionamide], 4,4'-thiobis(6-tert-butyl-m-cresol), 2,2'-methylenebis(4-ethyl-6-tert-butylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl) isocyanurate, 1,3,5-tris(3,5-di-tert-butyl-4-hydroxybenzyl) isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl (3,5-di-tert-butyl-4-hydroxyphenyl)propionate, tetrakis[methyl 3-(3,5-di-tert-butyl-4-hydroxyphenyl)propionate]methane, thiodiethylene glycol bis[(3,5-di-tert-butyl-4-hydroxyphenyl)propionate], 1,6-hexamethylenebis[(3,5-di-tert-butyl-4-hydroxyphenyl)propionate], bis[3,3-di(4-hydroxy-3-tert-butylphenyl)butyric acid] glycol ester, bis[2-tert-butyl-4-methyl-6-(2-hydroxy-3-tert-butyl-5-methylbenzyl)phenyl] terephthalate, 1,3,5-tris[(3,5-di-tert-butyl-4-hydroxyphenyl)propionyloxyethyl] isocyanurate, 3,9-bis[1,1-dimethyl-2-{(3-tert-butyl-4-hydroxy-5-methylphenyl)propionyloxy}ethyl]-2,4,8,10-tetraoxaspiro[5,5]undecane, and triethylene glycol bis[(3-tert-butyl-4-hydroxy-5-methylphenyl)propionate]. The amount of the phenol antioxidant to be added is preferably 0.001 to 10 parts, still preferably 0.05 to 5 parts, by mass per 100 parts by mass of the synthetic resin.

The above-mentioned phosphorus antioxidants include trisnonylphenyl phosphite, tris[2-tert-butyl-4-(3-tert-butyl-4-hydroxy-5-methylphenylthio)-5-methylphenyl] phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-tert-butyl-5-methylphenol) diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)octadecyl phosphite, 2,2'-ethylidenebis(4,6-di-tert-butylphenyl) fluorophosphite tris(2-[(2,4,8,10-tetrakistert-butyldibenzo[d,f][1,3,2]-dioxaphosphepin-6-yl)oxy]ethyl)amine, and a phosphite of 2-ethyl-2-butylpropylene glycol and 2,4,6-tri-tert-butylphenol. The phosphorus antioxidant is preferably used in an amount of 0.001 to 10 parts by mass, still preferably 0.05 to 5 parts by mass, per 100 parts by mass of the synthetic resin.

Examples of useful thioether antioxidants include dialkyl thiodipropionates, such as dilauryl thiodipropionate, dimyristyl thiodipropionate, and distearyl thiodipropionate; and pentaerythritol tetra(β-alkylmercapto)propionic acid esters. A preferred amount of the thioether antioxidant to be added is 0.001 to 10 parts by mass, still preferably 0.05 to 5 parts by mass, per 100 parts by mass of the synthetic resin.

The above-mentioned ultraviolet absorbers include 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone);
2-(2'-hydroxyphenyl)benzotriazoles, such as
2-(2'-hydroxy-5'-methylphenyl)benzotriazole,
2-(2'-hydroxy-3',5'-di-tert-butylphenyl)-5-chlorobenzotriazole,
2-(2'-hydroxy-3'-tert-butyl-5'-methylphenyl)-5-chlorobenzotriazole,
2-(2'-hydroxy-5'-tert-octylphenyl)benzotriazole,
2-(2'-hydroxy-3',5'-dicumylphenyl)benzotriazole,
2,2'-methylenebis(4-t-octyl-6-(benzotriazolyl)phenol), and
2-(2'-hydroxy-3'-tert-butyl-5'-carboxyphenyl)benzotriazole; benzoates,
such as phenyl salicylate, resorcinol monobenzoate,
2,4-di-tert-butylphenyl 3,5-di-tert-butyl-4-hydroxybenzoate,
2,4-di-tert-amylphenyl 3,5-di-tert-butyl-4-hydroxybenzoate,
and hexadecyl 3,5-di-tert-butyl-4-hydroxybenzoate; substituted oxanilides,
such as 2-ethyl-2'-ethoxyoxanilide and 2-ethoxy-4'-dodecyloxanilide; cyanoacrylates, such as ethyl α-cyan-β,β-diphenylacrylate and
methyl 2-cyano-3-methyl-3-(p-methoxyphenyl)acrylate; and triaryltriazines,
such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and
2-(2-hydroxy-4-propoxy-5-methylphenyl)-4,6-bis(2,4-di-tert-butylphenyl)-s-triazine.
A preferred amount of the ultraviolet absorber to be added is 0.001 to 30 parts, still preferably 0.05 to 10 parts, by mass per 100 parts by mass of the synthetic resin.

Examples of suitable hindered amine light stabilizers include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-tetramethyl-4-piperidyl) sebacate, bis(1-octoxy-2,2,6,6-tetramethyl-4-piperidyl) sebacate, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, bis(2,2,6,6-tetramethyl-4-piperidyl)di(tridecyl) 1,2,3,4-butanetetracarboxylate, bis(1,2,2,6,6-pentamethyl-4-piperidyl)di(tridecyl) 1,2,3,4-butanetetracarboxylate, bis(1,2,2,4,4-pentamethyl-4-piperidyl)-2-butyl-2-(3,5-di-t-butyl-4-hydroxybenzyl) malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8,12-tetraazadodecane, 1,6,11-tris[2,4-bis(N-butyl-N-(2,2,6,6-tetramethyl-4-piperidyl)amino)-s-triazin-6-yl]aminoundecane, and 1,6,11-tris[2,4-bis(N-butyl-N-(1,2,2,6,6-pentamethyl-4-piperidyl)amino)-s-triazin-6-yl]aminoundecane. A preferred amount of the hindered amine light stabilizer to be added is 0.001 to 30 parts, still preferably 0.05 to 10 parts, by mass per 100 parts by mass of the synthetic resin.

If desired, the flame-retardant resin composition of the invention can further contain other additives. Suitable additives include nucleating agents, such as aluminum p-tert-butylbenzoate, aromatic phosphoric ester metal salts, and dibenzylidene sorbitols; antistatics, metal soaps, hydrotalcite, triazine ring-containing compounds, metal hydroxides, phosphate flame retardants, other inorganic phosphorus flame retardants, halogen flame retardants, silicon flame retardants, fillers, pigments, lubricants, and blowing agents.

The above-mentioned triazine ring-containing compounds include melamine, ammeline, benzoguanamine, acetoguanamine, phthalodiguanamine, melamine cyanurate, melamine pyrophosphate, butylene diguanamine, norbornene diguanamine, methylene diguanamine, ethylene dimelamine, trimethylene dimelamine, tetramethylene dimelamine, hexamethylene dimelamine, and 1,3-hexylene dimelamine.

The above-mentioned metal hydroxides include magnesium hydroxide, aluminum hydroxide, calcium hydroxide, barium hydroxide, and zinc hydroxide.

The above-mentioned phosphate flame retardants include phosphoric ester compounds represented by general formula (4): 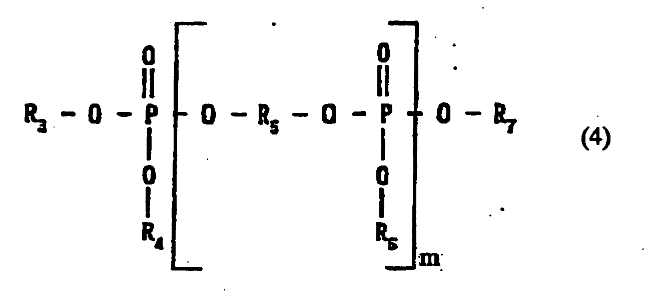 wherein R₃, R₄, R₆, and R₇, which may be the same or different, each present an alkyl group having 1 to 10 carbon atoms or an aromatic group represented by general formula (5) shown below; R₅ represents a divalent aromatic group represented by general formulae (6) or (7); and m represents a number of 0 to 30: 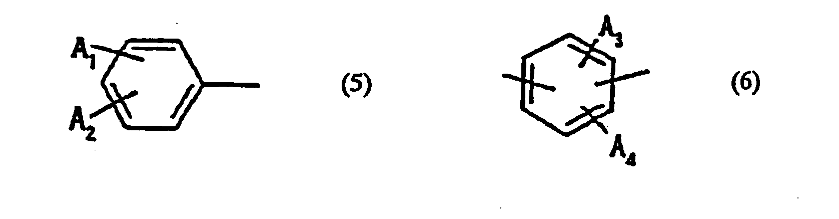 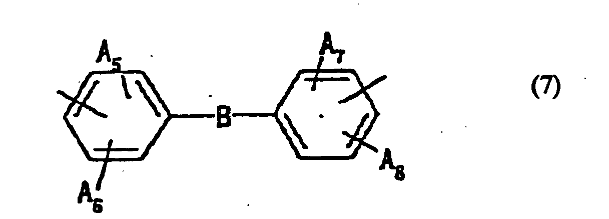 wherein A₁ and A₂ each represents a hydrogen atom or an alkyl group having 1 to 10 carbon atoms; A₃, A₄, A₅, A₆, A₇, and A₈ each represents a hydrogen atom, an alkyl group having 1 to 4 carbon atoms, a cycloalkyl group, an aryl group, an alkoxy group, a nitro group, a halogen atom or a cyano group; B represents a direct bond, a divalent S atom, a sulfone group, an alkylidene group having 1 to 5 carbon atoms, or an alkylene group having 1 to 5 carbon atoms.

The flame-retardant resin composition of the present invention is not limited in use. For example, the flame-retardant polypropylene resin composition of the invention has a variety of applications as machine mechanical parts, electric or electronic parts, and automobile parts. Examples of the applications include electric and electronic parts, such as gears, cases, sensors, LEP lamps, connectors, sockets, resistors, relay cases, switches, coil bobbins, condensers, variable condensers, light pickups, oscillators, terminal boards, transformers, plugs, printed wiring boards, tuners, speakers, microphones, headphones, small-sized motors, magnetic head bases, power modules, housings, semiconductor devices, liquid crystal devices, FDD carriages, FDD chassis, motor brush holders, parabolic antennas, and computer-related parts; parts of domestic and office appliances, such as VTRs, TV sets, irons, hair driers, rice cookers, microwave ovens, audio-visual media (e.g., laser discs and compact discs), lighting fixtures, refrigerators, air conditioners, typewriters, word processors, office computers, telephones, facsimiles, and word processors; office computer-related parts, telephone-related parts, facsimile-related parts, copier-related parts; washing jigs; machines-related parts, such as various bearings (e.g., oil's bearings, stem bearings, and submergible bearings), motors, lighters, and typewriters; optical equipment and precision machine-related parts, such as microscopes, binoculars, cameras, and watches; automobile parts, such as alternator terminals, alternator connectors, IC regulators, potentiometer bases, various valves (e.g., exhaust valves), fuel-, exhaust- or suction-related pipes, air intake snorkels, intake manifolds, fuel pumps, engine cooling water joints, carburetor main bodies, carburetor spacers, exhaust sensors, cooling water sensors, oil temperature sensors, brake pad wear sensors, throttle position sensors, crank shaft position sensors, air flow meters, brake pad wear sensors, AC thermostat bases, AC warm air flow control valves, brush holders for radiator motor, water pump impellers, turbine vanes, wiper motor-related parts, distributors, starter switches, starter relays, transmission wire harnesses, window washer nozzles, AC panel switch boards, coils for fuel-related electromagnetic valves, fuse connectors, horn terminals, insulators for electric parts and accessories, rotors for step motors, lamp sockets, lamp reflectors, lamp housings, brake pistons, solenoid bobbins, engine oil filters, and ignition unit cases; parts of electric and electronic equipment, such as housings of personal computers, printers, displays, CRTs, facsimiles, copiers, word processors, notebook computers, and memories of DVD drives, PD drives or floppy disc drives; other molded articles; films; filaments; and fibers.

The present invention will now be illustrated in greater detail with reference to Examples, but it should be understood that the invention is not construed as being limited thereto.

### [EXAMPLES 1-1 TO 1-13 AND COMPARATIVE EXAMPLES 1-1 TO 1-5]

Flame retardant compositions were prepared following the formulations presented in Tables 1 to 3. The melamine pyrophosphate, piperazine pyrophosphate, and piperazine polyphosphate used in the formulations were prepared as follows.

### <Preparation of Melamine Pyrophosphate>

Pyrophosphoric acid and melamine were allowed to react at a molar ratio of 1:1. '

### <Preparation of Piperidine Pyrophosphate>

Pyrophosphoric acid and piperazine were allowed to react at a molar ratio of 1:1.

### <Preparation of Piperazine Polyphosphate>

A polyphosphoric acid (Polyphosphoric Acid 107, available from Nippon Chemical Industrial Co., Ltd.) and piperazine were allowed to react at a molar ratio of 1:1 in an aqueous methanol solution.

### <Preparation of Ground Product>

The components were mixed in a tub mixer for 30 minutes and then ground in a pin mill (free grinding machine, Model M4, supplied by Nara Machinery Co., Ltd.). The average particle size (µm) of the resulting flame retardant composition is shown in Tables 1 to 3.

### <Test for Confirming Agglomeration Prevention>

The composition was screened under the following conditions before and after storage at 50°C under a load of 0.175 kg·cm⁻¹ for one week to obtain a percent passing the 60-mesh sieve.

### [Conditions]

Equipment: Hosokawa Micron TP-E
Sample: 3 g
Vibration intensity: dial 5

**[TABLE 1]**

| unit of formulation: part by mass | | | | | | | | |
|---|---|---|---|---|---|---|---|---|
| | | Example No. | | | | | | |
| | | 1-1 | 1-2 | 1-3 | 1-4 | 1-5 | 1-6 | 1-7 |
| Melamine Pyrophosphate | | 40.0 | 40.0 | 40.0 | 40.0 | 40.0 | 40.0 | 40.0 |
| Piperazine Pyrophosphate | | 60.0 | - | - | - | - | - | - |
| Piperazine Polyphosphate | | - | 60.0 | 60.0 | 60.0 | 60.0 | 60.0 | 60.0 |
| SiO₂^{*1} | | 1.0 | 1.0 | - | - | - | - | 1.0 |
| SiO₂^{*2} | | - | - | 1.0 | - | - | - | - |
| SiO₂^{*3} | | - | - | - | 1.0 | - | - | - |
| TiO₂ | | - | - | - | - | 1.0 | - | - |
| ZnO₂ | | - | - | - | - | - | 1.0 | - |
| Stearic Acid | | 0.5 | 0.5 | 0.5 | 0.5 | 0.5 | 0.5 | 0.8 |
| Average Particle Size (µm) | | 4.1 | 4.7 | 3.8 | 4.9 | 4.6 | 4.7 | 4.9 |
| Percent Passing 60-Mesh Sieve(%) | Initial | 99.4 | 98.6 | 99.6 | 97.2 | 96.3 | 97.0 | 99.8 |
| | 50 °C ,After 1week | 99.3 | 98.5 | 98.5 | 96.4 | 95.6 | 96.8 | 98.4 |

| | | | | | | | | |
|---|---|---|---|---|---|---|---|---|
| *1: ┌Aerosil R972┘ from Nippon Aerosil Co., Ltd. *2: ┌Aerosil R974┘ from Nippon Aerosil Co., Ltd. *3: ┌Aerosil 200┘ from Nippon Aerosil Co., Ltd. | | | | | | | | |

**[TABLE 2]**

| unit of formulation: part by mass | | | | | | | |
|---|---|---|---|---|---|---|---|
| | | Example No. | | | | | |
| | | 1-8 | 1-9 | 1-10 | 1-11 | 1-12 | 1-13 |
| Ammonium Polyphosphate^{*4} | | - | - | - | - | - | 40.0 |
| Melamine Pyrophosphate | | 40.0 | 50.0 | 40.0 | 40.0 | 40.0 | - |
| Piperazine Pyrophosphate | | - | - | 60.0 | 60.0 | 60.0 | 60.0 |
| Piperazine Polyphosphate | | 60.0 | 50.0 | - | - | - | - |
| SiO₂^{*2} | | 2.0 | 1.0 | 1.0 | 1.0 | 1.0 | 1.0 |
| Stearic Acid | | 0.8 | 0.5 | - | - | - | 0.5 |
| Calcium Stearate | | - | - | 0.5 | - | - | - |
| Ethylenebis-(stearamide)^{*5} | | - | - | - | 0.5 | - | - |
| Glycerol Monostearate^{*6} | | - | - | - | - | 0.5 | - |
| Average Particle Size (µm) | | 3.9 | 4.0 | 4.1 | 4.3 | 4.2 | 4.5 |
| Percent Passing 60-Mesh Sieve(%) | Initial | 96.6 | 98.8 | 98.6 | 97.9 | 98.9 | 98.8 |
| | 50°C,After 1 week | 95.7 | 97.6 | 97.4 | 96.7 | 96.9 | 96.7 |

| | | | | | | | |
|---|---|---|---|---|---|---|---|
| *4: ┌Terraju C-70┘ from Chisso Corp. *5: ┌Slipax E┘ from Nippon Kasei Chemical Co., Ltd. *6: ┌Rikemal S100┘ from Riken Vinyl Industry Co., Ltd. | | | | | | | |

**[TABLE 3]**

| unit of formulation: part by mass | | | | | | |
|---|---|---|---|---|---|---|
| | | Comparative Example No. | | | | |
| | | 1-1 | 1-2 | 1-3 | 1-4 | 1-5 |
| Ammonium Polyphosphate | | - | - | - | - | 40.0 |
| Melamine Pyrophosphate | | 40.0 | 40.0 | 40.0 | 40.0 | - |
| Piperazine Pyrophosphate | | - | 60.0 | 60.0 | 60.0 | 60.0 |
| Piperazine Polyphosphate | | 60.0 | - | - | - | - |
| SiO₂^{*1} | | 1.0 | 1.0 | - | - | 1.0 |
| Stearic Acid | | - | - | 0.5 | - | - |
| Average Particle Size (µm) | | 4.6 | 4.8 | 11.5 | 23.5 | 4.9 |
| Percent Passing 60-Mesh Sieve(%) | Initial | 99.0 | 98.6 | 57.0 | 24.3 | 97.8 |
| | 50°C, after 1 week | 86.5 | 85.3 | 41.0 | 15.0 | 84.2 |

### [EXAMPLES 2-1 TO 2-6 AND COMPARATIVE EXAMPLES 2-1 TO 2-6]

A hundred parts by mass of a polypropylene resin (injection molding grade, available from Mitsui Chemicals, Inc.) was compounded with 0.1 part by mass of calcium stearate (lubricant), 0.1 part by mass of tetrakis[methyl 3-(3,5-di-tert-butyl-4-hydroxyphenyl)propionate]methane (phenol antioxidant), and 0.1 part by mass of bis(2,6-di-tert-butyl-4-methylphenyl)pentaerythritol diphosphite (phosphorus antioxidant) to prepare a polypropylene resin composition. The polypropylene resin composition (the amount is shown in Tables 4 and 5) was mixed with the flame retardant composition and other compounding additives according to Tables 4 and 5. The mixture was extruded at 200° to 230°C and pelletized. The resulting compound was injection molded at 220°C to prepare 1.6 mm thick specimens. The flame retardant compositions were used after storage at 50°C under a load of 0.175 kg·cm⁻¹ for one week.

### <UL Flammability 94V Test>

The specimen of 12.7 mm in width, 127 mm in length, and 1.6 mm in thickness was positioned vertically, and a test burner flame was applied to the lower end of the specimen for 10 seconds. After 10 seconds, the flame was removed, and the time required to self-extinguish (burning time) was recorded. As soon as the flame was extinguished, the flame was immediately applied for another 10 seconds. Again the burning time was recorded. Ignition of the cotton layer under the specimen by any drips of flaming particles was also observed.

The burning time after each flame application and the ignition of the cotton layer were interpreted into a UL-94 flammability rating. The V-0 rating is the lowest flammability. The V-1 rating is less flame retardancy, and V-2 rating is still less flame retardancy. A specimen that was not interpreted into any of these ratings was rated "NR". Furthermore, the oxygen index was measured.

### <Agglomerate in Molded Article>

Sixty grams of the resin composition of the formulation shown in Tables 4 and 5 was mixed in a Labo Plastomill at 200°C and 40 rpm for 10 minutes and injection molded at 200°C to prepare a 1 mm thick test piece, which was inspected for agglomerates. A test piece with at least one agglomerate was rated "yes", and a test piece with no agglomerate "no".

**[TABLE 4]**

| unit of formulation: part by mass | | | | | | | |
|---|---|---|---|---|---|---|---|
| | | Example No. | | | | | |
| | | 2-1 | 2-2 | 2-3 | 2-4 | 2-5 | 2-6 |
| Polypropylene Resin Composition | | 70.0 | 70.0 | 79.9 | 78.9 | 73.0 | 73.9 |
| Flame Retardant Composition | Example 1-1 | 30.0 | - | 20.0 | - | - | - |
| | Example 1-2 | - | 30.0 | - | 21.0 | 26.0 | - |
| | Example 1-13 | - | - | - | - | - | 26.0 |
| TiO₂ (metal oxide) | | - | - | - | - | 1.0 | - |
| PTFE | | - | - | 0.1 | 0.1 | - | 0.1 |
| UL-94V (1.6 mm) | | V-0 | V-0 | V-0 | V-0 | V-0 | V-0 |
| Oxygen Index | | 37.0 | 36.5 | 28.5 | 29.0 | 35.0 | 32.5 |
| Agglomerate in Molded Article | | No | No | no | no | no | No |

**[TABLE 5]**

| unit of formulation: part by mass | | | | | | | |
|---|---|---|---|---|---|---|---|
| | | Comparative Example No. | | | | | |
| | | 2-1 | 2-2 | 2-3 | 2-4 | 2-5 | 2-6 |
| Polypropylene Resin Composition | | 70.0 | 70.0 | 78.9 | 78.9 | 78.9 | 73.9 |
| Flame Retardant Composition | Comparative Example 1-1 | 30.0 | - | - | - | - | - |
| | Comparative Example 1-2 | - | 30.0 | 21.0 | - | - | - |
| | Comparative Example 1-3 | - | - | - | 21.0 | - | - |
| | Comparative Example 1-4 | - | - | - | - | 21.0 | - |
| | Comparative Example 1-5 | - | - | - | - | - | 26.0 |
| TiO₂ (metal oxide) | | - | - | - | - | - | - |
| PTFE | | - | - | 0.1 | 0.1 | 0.1 | 0.1 |
| UL-94V (1.6 mm) | | V-0 | V-0 | V-0 | V-0 | V-0 | V-0 |
| Oxygen Index | | 36.5 | 36.0 | 29.0 | 29.0 | 29.0 | 32.0 |
| Agglomerate in Molded Article | | Yes | Yes | yes | yes | yes | yes |

As is apparent from Tables 1 to 5, the flame retardant compositions of Examples 1-1 to 1-13 containing, as essential components, phosphate compounds (a) and (b) specified in the invention as components (A) and (B), respectively, silicon dioxide or metal oxides as component (C), and at least one member selected from higher aliphatic carboxylic acids, metal salts of higher aliphatic carboxylic acid, higher fatty acid amide compounds, and esters between mono- or polyhydric alcohols and higher aliphatic carboxylic acids as component (D) were proved not to form secondary agglomerates and to have excellent storage stability. It was also confirmed that compounding these compositions into a polypropylene resin gives highly flame-retardant resin compositions that can provide molded articles with no agglomerates and are suited to practical use (see Examples 2-1 to 2-6).

### Industrial Applicability:

The flame retardant composition of the present invention does not form secondary agglomerates. When compounded with synthetic resins, the flame retardant composition of the invention provides flame-retardant resin compositions containing small amounts of flame retardants and yet exhibiting excellent flame retardancy without the aid of a halogen-based flame retardant that involves harmful gas emission on combustion.

## Claims

1. A flame retardant composition comprising:
(A) a phosphate compound (a) represented by general formula (1): 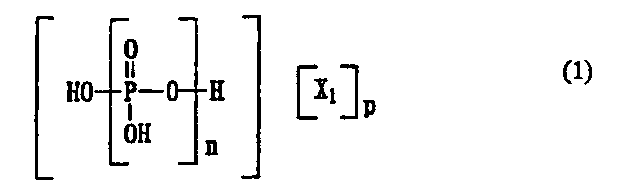 wherein n represents a number of 1 to 100; X₁ represents ammonia or a triazine derivative represented by formula (2) : and 0<p≤n+2: 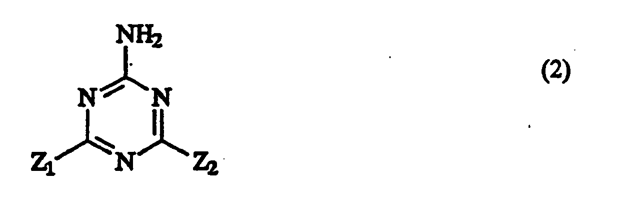 wherein Z₁ and Z₂, which may be the same or different, each represents a group selected from the group consisting of -NR₅R₆ (wherein R₅ and R₆, which may be the same or different, each represents a hydrogen atom, a straight-chain or branched alkyl group having 1 to 6 carbon atoms or a methylol group), a hydroxy group, a mercapto group, a straight-chain or branched alkyl group having 1 to 10 carbon atoms, a straight-chain or branched alkoxy group having 1 to 10 carbon atoms, a phenyl group, and a vinyl group;
(B) a phosphate compound (b) represented by general formula (3): 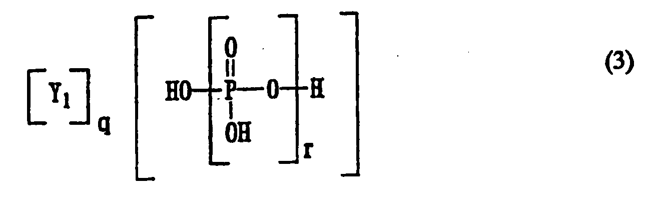 wherein r represents a number of 1 to 100; Y₁ represents [R₁R₂N(CH₂)ₘNR₃R₄],
piperazine or a diamine containing a piperazine ring; R₁, R₂, R₃, and R₄, which may be the same or different, each represents a hydrogen atom or a straight-chain or branched alkyl group having 1 to 5 carbon atoms; m represents an integer of 1 to 10; and 0<q≤r+2;
(C) silicon dioxide or metal oxides; and
(D) at least one member selected from higher aliphatic carboxylic acids, metal salts of higher aliphatic carboxylic acid, higher fatty acid amide compounds, and esters between mono- or polyhydric alcohols and higher aliphatic carboxylic acids.

2. The flame retardant composition according to claim 1, wherein the compounding ratio of component (A) represented by general formula (1) to component (B) represented by general formula (3) is 20/80 to 60/40 by mass, and components (C) and (D) are each present in an amount of 0.01 to 10 parts by mass per 100 parts by mass of the total of components (A) and (B).

3. The flame retardant composition according to claim 1, wherein component (A) is melamine pyrophosphate of general formula (1) in which n is 2, p is 2, and X₁ is melamine of general formula (2) in which Z₁ and Z₂ are each NH₂.

4. The flame retardant composition according to claim 1, wherein component (B) is a piperazine polyphosphate of general formula (3) in which q is 1, and Y₁ is piperazine.

5. The flame retardant composition according to claim 4, wherein the piperazine polyphosphate is piperazine pyrophosphate.

6. The flame retardant composition according to claim 1, wherein component (C) is silicon dioxide.

7. The flame retardant composition according to claim 6, wherein the silicon dioxide as component (C) is hydrophobic silica.

8. The flame retardant composition according to claim 1, wherein component (D) is stearic acid.

9. The flame retardant composition according to claim 1, wherein component (D) is ethylenebis(stearamide).

10. A flame-retardant resin composition comprising a synthetic resin having incorporated therein the flame retardant composition according to any one of claims 1 to 9.

11. The flame-retardant resin composition according to claim 10, wherein the flame retardant composition is present in an amount of 5 to 50 parts by mass per 100 parts by mass of the synthetic resin.

12. The flame-retardant resin composition according to claim 10, wherein the synthetic resin is polyolefin resin.

13. The flame-retardant resin composition according to claim 12, wherein the polyolefin resin is polypropylene resin or polyethylene resin.

## Patentansprüche

1. Flammenhemmende Zusammensetzung, umfassend:
(A) eine Phosphatverbindung (a), die durch die allgemeine Formel (1) dargestellt wird: 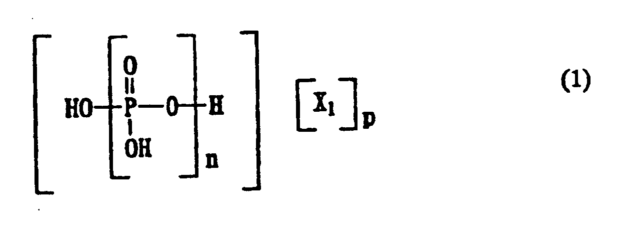 wobei n eine Zahl von 1 bis 100 darstellt; X₁ Ammoniak oder ein Triazinderivat, das durch die Formel (2) dargestellt wird, darstellt; und 0<p≤n+2: 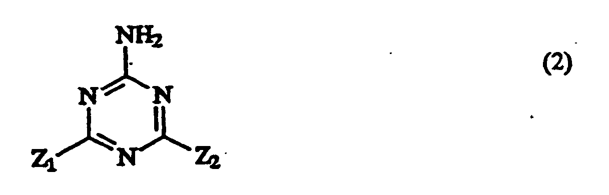 wobei Z₁ und Z₂, die gleich oder verschieden sein können, jeweils eine Gruppe darstellen, die aus der Gruppe ausgewählt wird, die aus -NR₅R₆ (wobei R₅ und R₆, die gleich oder verschieden sein können, jeweils ein Wasserstoffatom, eine geradkettige oder verzweigte Alkylgruppe mit 1 bis 6 Kohlenstoffatomen oder eine Methylolgruppe darstellen), einer Hydoxygruppe, einer Mercaptogruppe, einer geradkettigen oder verzweigten Alkylgruppe mit 1 bis 10 Kohlenstoffatomen, einer geradkettigen oder verzweigten Alkoxygruppe mit 1 bis 10 Kohlenstoffatomen, einer Phenylgruppe, und einer Vinylgruppe besteht;
(B) eine Phosphatverbindung (b), die durch die allgemeine Formel (3) dargestellt wird: 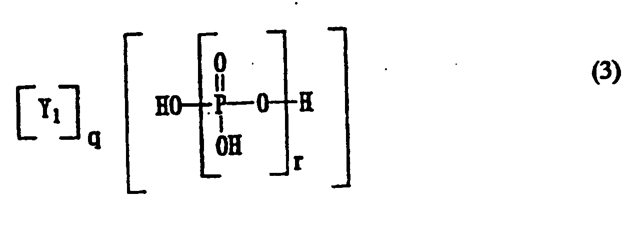 wobei r eine Zahl von 1 bis 100 darstellt; Y₁ [R₁R₂N(CH₂)ₘNR₃R₄], Piperazin oder ein Diamin, das einen Piperazinring enthält, darstellt; R₁, R₂, R₃ und R₄, die gleich oder verschieden sein können, jeweils ein Wasserstoffatom oder eine geradkettige oder verzweigte Alkylgruppe mit 1 bis 5 Kohlenstoffatomen darstellt; m eine ganze Zahl von 1 bis 10 darstellt; und 0<q≤r+2;
(C) Siliciumdioxid oder Metalloxide; und
(D) mindestens ein Glied, das aus höheren aliphatischen Carbonsäuren, Metallsalzen von höheren aliphatischen Carbonsäuren, höheren Fettsäureamidverbindungen, und Estern zwischen ein- oder mehrwertigen Alkoholen und höheren aliphatischen Carbonsäuren ausgewählt wird.

2. Flammenhemmende Zusammensetzung nach Anspruch 1, wobei das Mischverhältnis von Komponente (A), die durch die allgemeine Formel (1) dargestellt wird, zu Komponente (B), die durch die allgemeine Formel (3) dargestellt wird, von 20/80 bis 60/40 bezogen auf die Masse beträgt, und die Komponenten (C) und (D) jeweils in einer Menge von 0,01 bis 10 Massenteilen pro 100 Massenteilen der Gesamtheit der Komponenten (A) und (B) vorhanden sind.

3. Flammenhemmende Zusammensetzung nach Anspruch 1, wobei die Komponente (A) Melaminpyrophosphat der allgemeinen Formel (1) ist, in der n 2 ist, p 2 ist, und X₁ Melamin der allgemeinen Formel (2) ist, in der Z₁ und Z₂ jeweils -NH₂ sind.

4. Flammenhemmende Zusammensetzung nach Anspruch 1, wobei die Komponente (B) ein Piperazinpolyphosphat der allgemeinen Formel (3) ist, in der q 1 ist, und Y₁ Piperazin ist.

5. Flammenhemmende Zusammensetzung nach Anspruch 4, wobei das Piperazinpolyphosphat Piperazinpyrophosphat ist.

6. Flammenhemmende Zusammensetzung nach Anspruch 1, wobei die Komponente (C) Siliciumdioxid ist.

7. Flammenhemmende Zusammensetzung nach Anspruch 6, wobei das Siliciumdioxid als Komponente (C) hydrophobes Silica ist.

8. Flammenhemmende Zusammensetzung nach Anspruch 1, wobei die Komponente (D) Sterinsäure ist.

9. Flammenhemmende Zusammensetzung nach Anspruch 1, wobei die Komponente (D) Ethylenbis(Stearamid) ist.

10. Flammenhemmende Harzzusammensetzung, umfassend ein synthetisches Harz, das darin eingearbeitet die flammenhemmende Zusammensetzung nach einem der Ansprüche 1 bis 10 aufweist.

11. Flammenhemmende Harzzusammensetzung nach Anspruch 10, wobei die flammenhemmende Zusammensetzung in einer Menge von 5 bis 50 Massenteilen pro 100 Massenteilen des synthetischen Harzes vorhanden ist.

12. Flammenhemmende Harzzusammensetzung nach Anspruch 10, wobei das synthetische Harz ein Polyolefinharz ist.

13. Flammenhemmende Harzzusammensetzung nach Anspruch 12, wobei das Polyolefinharz ein Polypropylenharz oder ein Polyethylenharz ist.

## Revendications

1. Composition ignifuge comprenant :
(A) un composé à base de phosphate (a) représenté par la formule générale (1) : 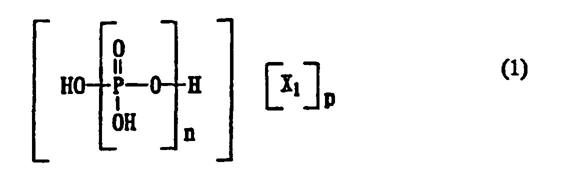 où n représente un nombre de 1 à 100 ; X₁ est l'ammoniaque ou un dérivé de triazine représenté par la formule (2) : et 0 < p ≤ n+2 : 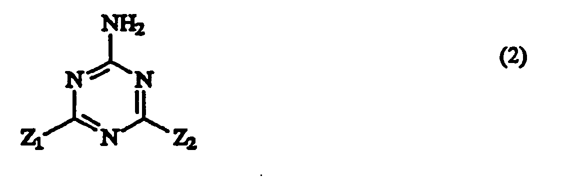 où Z₁ et Z₂, qui peuvent être les mêmes ou être différents, représentent chacun un groupement choisi dans le groupe constitué de -NR₅R₆ (où R₅ et R₆, qui peuvent être les mêmes ou être différents, représentent chacun un atome d'hydrogène, un groupe alkyle à chaîne droite ou ramifiée ayant 1 à 6 atomes de carbone ou un groupe méthylol), un groupe hydroxy, un groupe mercapto, un groupe alkyle à chaîne droite ou ramifiée ayant 1 à 10 atomes de carbone, un groupe alcoxy à chaîne droite ou ramifiée ayant 1 à 10 atomes de carbone, un groupe phényle et un groupe vinyle ;
(B) un composé à base de phosphate (b) représenté par la formule générale (3): 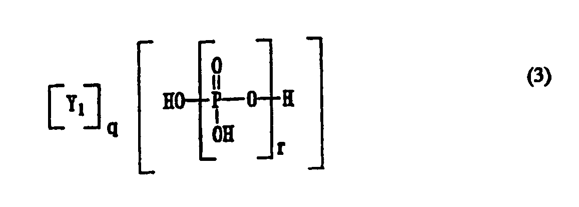 où r est un nombre de 1 à 100 ; Y₁ représente le [R₁R₂N(CH₂)ₘNR₃R₄], la pipérazine ou la diamine contenant un cycle pipérazine ; R₁, R₂, R₃ et R₄, qui peuvent être les mêmes ou être différents, représentent chacun un atome d'hydrogène ou un groupe alkyle à chaîne droite ou ramifiée ayant 1 à 5 atomes de carbone ; m représente un entier de 1 à 10 ; et 0 < q ≤ r+2 ;
(C) du dioxyde de silicium ou des oxydes métalliques ; et
(D) au moins un élément choisi parmi les acides carboxyliques aliphatiques supérieurs, des sels métalliques d'acides carboxyliques aliphatiques supérieurs, des composés d'amide d'acide gras supérieurs, et des esters entre des alcools mono ou polyhydriques et des acides carboxyliques aliphatiques supérieurs.

2. Composition ignifuge selon la revendication 1, dans laquelle le rapport de mélange du composant (A) représenté par la formule générale (1) par le composant (B) représenté par la formule générale (3) est dans la plage de 20/80 à 60/40 en masse, et les composants (C) et (D) sont chacun présents en une quantité de 0,01 à 10 parties en masse par 100 parties en masse de l'ensemble des composants (A) et (B).

3. Composition ignifuge selon la revendication 1, dans laquelle le composant (A) est le pyrophosphate de mélamine de la formule générale (1) où n est égal à 2, p est égal à 2, et X₁ est de la mélamine de formule générale (2) dans laquelle Z₁ et Z₂ sont chacun -NH₂.

4. Composition ignifuge selon la revendication 1, dans laquelle le composant (B) est le polyphosphate de pipérazine de formule générale (3) où q est égal à 1, et Y₁ est de la pipérazine.

5. Composition ignifuge selon la revendication 4, dans laquelle le polyphosphate pipérazine est le pyrophosphate de pipérazine.

6. Composition ignifuge selon la revendication 1, dans laquelle le composant (C) est du dioxyde de silicium.

7. Composition ignifuge selon la revendication 6, dans laquelle le dioxyde de silicium en tant que composant (C) est de la silice hydrophobe.

8. Composition ignifuge selon la revendication 1, dans laquelle le composant (D) est de l'acide stéarique.

9. Composition ignifuge selon la revendication 1, dans laquelle le composant (D) est de l'éthylènebis (stéaramide).

10. Composition de résine ignifuge comprenant une résine synthétique, dans laquelle la composition ignifuge selon l'une quelconque des revendications 1 à 9 est incorporée.

11. Composition de résine ignifuge selon la revendication 10, dans laquelle la composition ignifuge est présente en une quantité de 5 à 50 parties en masse par 100 parties en masse de la résine synthétique.

12. Composition de résine ignifuge selon la revendication 10, dans laquelle la résine synthétique est de la résine de polyoléfine.

13. Composition de résine ignifuge selon la revendication 12, dans laquelle la résine de polyoléfine est de la résine de polypropylène ou de la résine de polyéthylène.
